Europäisches Patentamt

European Patent Office

Office européen des brevets

(11) Veröffentlichungsnummer: **0 454 212 A1**

(12) **EUROPÄISCHE PATENTANMELDUNG**

(21) Anmeldenummer: 91200845.5

(51) Int. Cl.5: **C23C 22/80**, C01B 25/37

(22) Anmeldetag: 11.04.91

(30) Priorität: **21.04.90 DE 4012796**

(43) Veröffentlichungstag der Anmeldung:
**30.10.91 Patentblatt 91/44**

(84) Benannte Vertragsstaaten:
**AT BE CH DE ES FR GB IT LI SE**

(71) Anmelder: **METALLGESELLSCHAFT
Aktiengesellschaft
Reuterweg 14
W-6000 Frankfurt am Main(DE)**
(84) **CH DE ES GB IT LI SE AT**

Anmelder: **SOCIETE CONTINENTALE PARKER
51, Rue Pierre B.P. 310
F-92111 Clichy Cédex(FR)**

(84) **BE FR**

(72) Erfinder: **Jentsch, Dieter, Dr.
Mozartweg 2a
W-6070 Langen(DE)**
Erfinder: **Rein, Rüdiger
Lahn-Dill-Strasse 20
W-3565 Breidenbach(DE)**
Erfinder: **Wittel, Klaus Werner, Dr.
Bernusstrasse 25
W-6000 Frankfurt am Main 90(DE)**

(74) Vertreter: **Rieger, Harald, Dr.
Reuterweg 14
W-6000 Frankfurt a.M.(DE)**

(54) **Verfahren zur Herstellung von Aktivierungsmitteln für die Zinkphosphatierung und deren Verwendung.**

(57) Bei einem Verfahren zur Herstellung von Aktivierungsmitteln auf Basis Titan(IV)-Phosphat für die Aktivierung metallischer Oberflächen vor einer Zinkphosphatierung wird derart gearbeitet, daß man unter Bedingungen gründlicher Vermischung

a) ein oder mehrere in Wasser oder Säure gelöste Titan(IV)-Verbindungen mit wäßrigem Alkali alkalisiert,

b) anschließend unter Beibehaltung des alkalischen pH-Wertes mit Orthophosphat versetzt und

c) bei einer Temperatur im Bereich von 70 bis 90°C und bei einem Druck zwischen Normaldruck und 300 bar mindestens 15 Minuten zwecks Reifung des Aktivierungsmittels rührt.

Bei Durchführung des Reifeprozesses gemäß Stufe c) bei einem Druck zwischen Normaldruck und 1 bar Überdruck werden die Verfahrensschritte a) und b) bei einer Temperatur zwischen Raumtemperatur und 45°C und bei Durchführung des Reifeprozesses gemäß Stufe c) bei einem Druck zwischen 1 bar und 300 bar werden die Verfahrensschritte a) und b) bei einer Temperatur zwischen Raumtemperatur und 90°C durchgeführt.

Vorzugsweise setzt man dem Aktivierungsmittel Kupfersalze, in einer Konzentration von 0,5 bis 2 Gew.-% (bezogen auf den Feststoffgehalt) zu.

Das Aktivierungsmittel wird allein oder im Gemisch mit kondensierten Phosphaten und/oder Komplexbildnern und/oder Silikaten und/oder Tensiden und/oder wasserlöslichen organischen Polymeren (Verdickungsmittel) im pH-Bereich von 7 bis 11, vorzugsweise 7,5 bis 10, zur Aktivierung von Metalloberflächen aus Eisen, Stahl, Zink, verzinktem Eisen oder verzinktem Stahl, Aluminium und/oder aluminiertem Stahl vor der Zinkphosphatierung verwendet.

EP 0 454 212 A1

Die Erfindung betrifft ein Verfahren zur Herstellung von Aktivierungsmitteln auf Basis Titan(IV)-Phosphat für die Aktivierung metallischer Oberflächen vor einer Zinkphosphatierung durch Umsetzung einer Titan(IV)-Verbindung mit einer Phosphor(V)-Verbindung in wäßriger Phase sowie die Verwendung des so hergestellten Aktivierungsmittels zur Aktivierung von Metalloberflächen, ggf. gemeinsam mit der alkalischen Reinigung..

Durch Phosphatierung mit wäßrigen Lösungen auf Basis Zinkphosphat lassen sich auf zahlreichen metallischen Oberflächen, wie Eisen, Stahl, legierungsverzinktem Stahl, Aluminium oder aluminiertem Stahl Zinkphosphatschichten erzeugen. Die Applikation der Phosphatierungslösungen, die neben Zink und Phosphorsäure noch weitere Kationen und Anionen enthalten können, erfolgt im Spritz-, Tauch- oder Spritz-/Tauchverfahren. Die erhaltenen Zinkphosphatschichten dienen dem Korrosionsschutz, der Lackhaftung, der Verminderung des Gleitwiderstandes, der Erleichterung der Kaltumformung und der elektrischen Isolation.

Zu einem Phosphatierverfahren gehören neben der Phosphatierung selbst noch diverse Vor- bzw. Nachbehandlungsstufen. Unerläßlich ist die Reinigung der Metalloberfläche, die im allgemeinen mit alkalischen oder sauren Reinigern erfolgt und die Metalloberfläche von Ölen, Fetten, Oxiden und anhaftenden Feststoffpartikeln befreit. Sofern die Reinigung mit mild alkalischen Reinigern erfolgt, ist es prinzipiell möglich, die Reinigung mit der Aktivierung der Metalloberfläche zu kombinieren. In der Regel schließt sich jedoch die Aktivierung als separater Verfahrensschritt an die Reinigung an.

Die Aktivierung der Metalloberfläche hat die Aufgabe, bei möglichst kurzen Phosphatierzeiten die Ausbildung einer möglichst feinkristallinen Zinkphosphatschicht zu gewährleisten. Ein Kriterium für die Wirkung eines Aktivierungsmittels ist daher die Mindestphosphatierzeit. Die Eignung zur Ausbildung auch feinkristalliner Zinkphosphatschichten läßt sich anhand der Schichtgewichte oder durch rasterelektronenmikroskopische Aufnahmen ermitteln. In der Praxis haben sich insbesondere Aktivierungsmittel auf Basis Titan(IV)-Phosphat bewährt. Titan(IV)-Phosphate bilden sich bei der Umsetzung von wäßrigen Titan(IV)-Salzlösungen mit löslichen Phosphaten oder Phosphorsäuren.

Gemäß den US-Patentschriften 2 310 239, 2 456 947, 2 462 192 und 2 490 062 werden Aktivierungsmittel auf Basis Titan(IV)-Phosphat hergestellt, indem man Dinatriumphosphat in Wasser löst, dann eine geeignete Titan(IV)-Verbindung aus der Gruppe Titanylsulfat, Kaliumhexafluorotitanat, Titantetrachlorid, Titanoxidhydrat, Titandioxid oder Titandisulfat zusetzt, die wäßrige Aufschlämmung während 10 Stunden bei einer Temperatur von 60 bis 85°C rührt und dann bis zur Trockne eindampft. Neben der Tatsache, daß dieser Herstellungsweg nur schwer zu reproduzierbaren Ergebnissen führt, ist dieses Verfahren allein wegen der Dauer des Rührens wenig ökonomisch. Darüber hinaus entsprechen die nach diesem Verfahren erhaltenen Aktivierungsmittel in ihren Eigenschaften nicht den heutigen Anforderungen.

In der EP-B-0 307 839 wird ein Verfahren zur Herstellung von aktivierenden Titanphosphaten, bei denen die bereits erwähnten Titan(IV)-Verbindungen mit einem oder mehreren wasserlöslichen Phosphaten unter Einstellung eines Atomverhältnisses von Ti:P von 1:(20 bis 60) zur Reaktion gebracht werden, beschrieben. Der pH-Wert soll bevorzugt auf einen Wert zwischen 7 und 10 eingestellt werden. Die auf diese Weise hergestellte Aufschlämmung wird anschließend hydrothermal, d.h. bei einer Temperatur oberhalb 100°C behandelt (s. Römpp Chemie Lexikon, 8. Aufl. (1983), Bd. 3). Beispielsweise soll die hydrothermale Behandlung bei Temperaturen von 100 bis 160°C und Drücken von 1 bis 6 bar während einer Reaktionszeit von 30 bis 180 Minuten vorgenommen werden.

Die erhaltene Dispersion kann zum einen direkt zum Ansetzen eines Aktivierungsbades mit einem Feststoffgehalt von z.B. 0,2 % benutzt oder zum anderen sprühgetrocknet werden. Die Verwendung der auf diese Weise hergestellten Aktivierungsmittel führt in der folgenden Phosphatierstufe jedoch zu Zinkphosphatschichten, die grobkristallin, zuweilen sogar nicht geschlossen sind. Zudem sind die Standzeiten der Bäder nur kurz und die Badkapazität entsprechend gering.

Die nach bekannten Verfahren hergestellten Aktivierungsmittel zur Behandlung von Metalloberflächen vor der Zinkphosphatierung weisen verschiedene Nachteile auf. Ihr Einfluß auf die Phosphatierung ist nur gering, d.h. die Mindestphosphatierzeit wird kaum verringert und die Zinkphosphatschichten bleiben häufig grobkristallin. Auch ist die Standzeit der Bäder mit oft nur wenigen Stunden sehr kurz. Ständiges hochdosiertes Ergänzen des Bades ist deshalb erforderlich. Ungünstig ist auch, daß die Aktivierungsbäder mit vollentsalztem Wasser angesetzt werden müssen, da die im Aktivierungsmittel enthaltenen Titan(IV)-Phosphate gegenüber der Wasserhärte instabil sind. Ein weiterer in der Anwendung begründeter Nachteil der bisher bekannten aktivierenden Titan(IV)-Phosphate liegt darin, daß sie ausschließlich in fester Form stabil sind. Dies führt zu Staubbelästigungen, erschwert zudem die Dosierung und die Handhabung.

Aufgabe der Erfindung ist es, ein Verfahren für die Herstellung von Aktivierungsmitteln auf Basis von Titanphosphaten für die Aktivierung metallischer Oberflächen vor der Zinkphosphatierung bereitzustellen, das zu qualitativ hochwertigen Aktivierungsmitteln führt und das wirtschaftlich und einfach in der Durchführung ist.

2

Die Aufgabe wird gelöst, indem das Verfahren der eingangs genannten Art entsprechend der Erfindung derart ausgestaltet wird, daß man unter Bedingungen gründlicher Vermischung

a) ein oder mehrere in Wasser oder Säure gelöste Titan(IV)-Verbindungen mit wäßrigem Alkali alkalisiert,

b) anschließend unter Beibehaltung des alkalischen pH-Wertes mit Orthophosphat versetzt und

c) bei einer Temperatur im Bereich von 70 bis 90°C und bei einem Druck zwischen Normaldruck und 300 bar mindestens 15 Minuten zwecks Reifung des Aktivierungsmittels rührt,

wobei bei Durchführung des Reifeprozesses gemäß Stufe c) bei einem Druck zwischen Normaldruck und 1 bar Überdruck die Verfahrensschritte a) und b) bei einer Temperatur zwischen Raumtemperatur und 45°C und bei Durchführung des Reifeprozesses gemäß Stufe c) bei einem Druck zwischen 1 bar und 300 bar die Verfahrensschritte a) und b) bei einer Temperatur zwischen Raumtemperatur und 90°C durchgeführt werden.

Für die Herstellung des Aktivierungsmittels dient als Ausgangsstoff Titan(IV)-Verbindung, die in konzentrierter Lauge zu einem Titandioxidgel hydrolysierbar ist. Es folgt die Zugabe eines Orthophosphates, z.B. in Form von Alkaliphosphat und/oder Phosphorsäure.

Entsprechend einer bevorzugten Ausgestaltung der Erfindung werden als Titan(IV)-Verbindung Titanhalogenide, Titanoxidsulfat, Alkoxytitanate, Titannitrat, Titandisulfat, Alkalimetallhexafluorotitanate und/oder Hexafluorotitansäure eingesetzt. Hexafluorotitansäure ist eine besonders bevorzugte Titan(IV)-Verbindung, weil bei der Hydrolyse keine Anionen gebildet werden, die ggf. die Aktivierungswirkung stören könnten. Es ist wichtig, daß die o.g. Bedingungen hinsichtlich Druck und Reaktionstemperatur beachtet werden. Die nach beiden Verfahrensvarianten erhaltene Aufschlämmung kann auf Anwendungskonzentration des Aktivierungsbades verdünnt werden. Man kann aber auch auf einen Feststoffgehalt von 4 bis 200 g/l einstellen und erhält eine über einen langen Zeitraum stabile Dispersion. Die Aufschlämmung kann jedoch auch zur Trockne bei einer Temperatur unterhalb 100°C eingedampft werden. Sowohl die sofortige Verdünnung als auch eine Wiederauflösung des zuvor getrockneten Aktivierungsmittels führt zu Aktivierungsbädern für die Aktivierung von metallischen Oberflächen, die über einen langen Zeitraum stabil sind.

Setzt man für die Bildung des Titanoxidgels entsprechend der o.g. bevorzugten Ausgestaltung der Erfindung eine fluoridhaltige Titan(IV)-Verbindung ein, so besteht eine weitere vorteilhafte Ausgestaltung der Erfindung darin, eine dem Fluorid etwa stöchiometrische Menge an zur Calciumfluoridbildung befähigtem Calciumsalz, beispielsweise Calciumnitrat, zuzugeben. Das Calciumsalz hat die Aufgabe, das freie Fluorid als Calciumfluorid zu fällen. Es wird zweckmäßigerweise zusammen mit der fluoridhaltigen Titanverbindung eingesetzt.

Eine zweckmäßige Ausführungsform der Erfindung besteht darin, die Titan(IV)-Verbindung mit Phosphat in einem Atomverhältnis von 1:(15 bis 60) einzusetzen.

Entsprechend einer weiteren vorteilhaften Ausgestaltung der Erfindung behandelt man die Aufschlämmung in der Stufe c) bei einem Druck von 1 bis 50 bar und einer Temperatur von 70 bis 85°C für die Dauer von 30 bis 180 Minuten. Insbesondere diese Behandlungsform gewährleistet eine reproduzierbar gleichmäßige Qualität des Aktivierungsmittels.

Will man die Lagerstabilität des flüssigen Aktivierungsmittels erhöhen, empfiehlt es sich entsprechend einer weiteren vorteilhaften Weiterbildung der Erfindung, das Aktivierungsmittel durch Zusatz von Verdickungsmitteln zu stabilisieren. Hierzu dienen vorzugsweise Verdickungsmittel aus der Gruppe der natürlichen Polymere. Diese Polymere verhindern insbesondere eine Phasentrennung, so daß ein vorheriges Aufrühren und Homogenisieren vor dem Einsatz des Aktivierungsmittels nicht erforderlich ist. Zudem ist das Dosieren des Aktivierungsmittels erheblich erleichtert.

Eine weitere vorteilhafte Ausgestaltung der Erfindung besteht darin, den Feststoffgehalt des flüssigen Aktivierungsmittels auf 50 bis 100 g/l einzustellen. Dies ist von Vorteil, weil hierdurch ein Auskristallisieren selbst bei tiefen Temperaturen verhindert wird. Das flüssige Aktivierungsmittel ist pumpfähig und lagerstabil.

Die Wirkung des Aktivierungsmittels, gleichgültig ob es in fester oder flüssiger Form vorliegt, kann weiterhin verbessert werden, wenn entsprechend einer weiteren Ausgestaltung der Erfindung ein Zusatz von Kupfersalzen, vorzugsweise Kupfernitrat, in einer Konzentration von 0,5 bis 2 Gew.-%, bezogen auf den Feststoffgehalt, vorgenommen wird. Insbesondere werden hierdurch Mindestphosphatierzeit und Schichtgewicht der erzeugten Phosphatschicht weiter gesenkt.

Sofern eine Trocknung des Aktivierungsmittels beabsichtigt ist, sieht eine weitere vorteilhafte Weiterbildung der Erfindung vor, die gemäß Stufe c) erhaltene Aufschlämmung unterhalb 110°C zu trocknen. Eine Trocknung im Sprüh- oder Wirbelschichtverfahren bei einer Produkttemperatur zwischen 60 und 90°C auf eine Restfeuchte von < 20 Gew.-% ist besonders günstig. Hierdurch werden rieselfähige Produkte erhalten. Zudem ermöglichen beide Trocknungsverfahren hohe Durchsatzleistungen.

Die nach dem erfindungsgemäßen Verfahren erhaltenen flüssigen oder festen Aktivierungsmittel werden allein oder im Gemisch mit kondensierten Phosphaten und/oder Komplexbildnern und/oder Silikaten

3

und/oder Tensiden und/oder wasserlöslichen organischen Polymeren, beispielsweise mit Maleinsäure-Copolymer, im pH-Bereich von 7 bis 11, vorzugsweise 7,5 bis 10, zur Aktivierung von Metalloberflächen aus Eisen, Stahl, Zink, verzinktem Stahl oder verzinktem Eisen, Aluminium und/oder aluminiertem Stahl vor der Zinkphosphatierung verwendet. Um das Aktivierungsbad gegenüber Wasserhärte unempfindlicher zu machen, können kondensierte Phosphate, beispielsweise Pyrophosphate, Komplexbildner, z.B. Phosphonate, und Silikate, wie Alkalisilikat oder Alkalialuminosilikate, eingesetzt werden. Der Zusatz von Tensiden vermindert die Oberflächenspannung und ermöglicht eine bessere Reaktion des Aktivierungsmittels mit der Metalloberfläche.

Auch können die festen oder flüssigen Aktivierungsmittel in gebrauchsfertige, wässrige alkalische Reinigerbäder oder aber in wässrig-flüssige oder feste Konzentrate, die zur Herstellung der Reinigerbäder mit Wasser verdünnt werden, eingearbeitet werden. Hierbei empfiehlt es sich, das Aktivierungsmittel in fester Form zu verwenden, wenn die Herstellung eines festen Reinigers/Aktivierungsmitelkonzentrates beabsichtigt ist, und das Aktivierungsmittel in gelöster Form oder als wässriges Konzentrat zu verwenden, wenn die Herstellung eines wässrigen Reinigers/Aktivierungsmittelkonzentrates bzw. der Zusatz zum gebrauchsfertigen Reiniger beabsichtigt ist. Wegen seiner leichten Verdünnbarkeit ist die Herstellung eines flüssigen Reinigers/Aktivierungsmittels besonders vorteilhaft.

Für die Herstellung der alkalischen Reiniger in fester bzw. wässrig-flüssiger Form werden beispielsweise ein oder mehrere Verbindungen aus der Gruppe der Karbonate, Silikate, Phosphate, Borate, Hydroxide, Hydroxycarbonsäuren und organischen Polymere, wie z.B. Natriumhydrogenkarbonat ($NaHCO_3$), Natriumkarbonat ($Na_2CO_3$), Natriummetasilikat wasserfrei ($Na_2SiO_3$), Natriumdisilikat ($Na_2Si_2O_5$), Natriumwasserglas, Dinatriumphosphat ($Na_2HPO_4$), Natriumtripolyphosphat ($Na_5P_3O_{10}$), Borax ($Na_2B_4O_7 \times 10H_2O$), Natriumhydroxid, Natriumglukonat, Natriumheptonat, Natriumzitrat, das Trinatriumsalz der Nitrilotri-essigsäure, Phenolsulfonsäure bzw. Naphtalinsulfonsäure-Formaldehyd-Kondensationsprodukte oder - wegen der besseren Löslichkeit in Wasser - die entsprechenden Kaliumverbindungen verwendet.

Üblicherweise enthalten alkalische Reiniger bzw. die alkalischen Reinigerkonzentrate Tenside. Als Tenside kommen insbesondere anionische oder nichtionische Tenside in Betracht wie z.B. Natrium-Alkylbenzolsulfonate, Natrium-Alkylsulfonate, Alkylphenol-polyethylenglykolether, Alkylphenol-polyethylenglykol-polypropylenglykolether, Alkylpolyethylenglykolether, Alkylamin-Polyethylenglykol-Abdukte oder Block-Copolymere aus Ethylenoxid und Propylenoxid. Im Falle des wässrig-flüssigen Reinigerkonzentrats beträgt der Gehalt an Tensid etwa 0,5 bis 10%, vorzugsweise 0,5 bis 4%.

Um bei einem wässrig-flüssigen aktivierenden Reinigerkonzentrat ein Absetzen evtl. unlöslicher, grobdisperser Anteile des Aktivierungsmittels sowie ggf. ein Aufschwimmen ausgesalzener Tenside zu verhindern, sollten Verdickungsmittel, vorzugsweise Polymere natürlichen Ursprungs, zugesetzt werden. Geeignete Polymere sind z.B. Polypeptide wie Gelatine, oder Polysaccharide wie Stärke, Xanthan oder Dextrine. Bei der Herstellung solcher Konzentrate werden zweckmäßigerweise zunächst das Polymer vollständig in Wasser und anschließend die verschiedenen Reinigerbestandteile gelöst. Dann werden gegebenenfalls die Tenside unter kräftigem Rühren gelöst bzw. fein dispergiert und als letztes das Aktivierungsmittel zugegeben. Bei geeigneter Zusammensetzung ist ein solches flüssiges, aktivierendes alkalisches Reinigerkonzentrat zwischen 0 und 35° C mehrere Monate lagerstabil und pumpfähig.

Besonders günstig ist es aus Gründen der Löslichkeit der einzelnen Komponenten, der Herstellungsweise und der Kosten für Verpackung und Transport, ein Konzentrat mit einem Wassergehalt von 50 - 90%, vorzugsweise 60 - 75%, herzustellen.

Die Applikation des aus dem Aktivierungsmittel gewonnenen Aktivierungsbades und ggf. des aktivierenden Reinigers erfolgt wie allgemein üblich, vorzugsweise im Tauch-, Spritz- oder Spritz-/Tauchverfahren, bei Raumtemperatur oder erhöhter Temperatur.

Die Erfindung wird anhand der nachfolgenden Beispiele näher und beispielsweise erläutert.

Beispiel 1

Stahlbleche der Qualität St 1405 wurden nach folgendem Verfahrensgang behandelt:

| | |
|---|---|
| 1. Reinigen | stark alkalischer Tauchreiniger |
| | 20 g/l; 10 min; 70° C |
| 2. Spülen | kaltes Wasser |
| | 30 sec |
| 3. Reinigen | mild alkalischer Tauchreiniger |
| | 13 g/l; 5 min; 60° C; |
| 4. Spülen | kaltes Wasser |
| | 30 sec |

| 3. Aktivierende Vorspülung | 1 g/l Aktivierungsmittel |
| | 30 sec tauchen; 22 °C |
| 6. Phosphatierung | 1,2 g/l Zn; 12,0 g/l $P_2O_5$; 0,8 g/l Mn; 0,8 g/l Ni; 7 g/l $NO_3$; 4,07 g/l Na; |
| | 0,17 g/l $NaNO_2$; 50 °C; Phosphatierzeit 3 und 6 min im Tauchen |
| 7. Spülen | kaltes Wasser |
| | 30 sec |
| 8. Trocknung | mit Warmluft |

Aktivierungsmittel 1

Zur Herstellung des erfindungsgemäßen Aktivierungmittels wurden 3,27 kg festes Natriumhydroxid in 4,9 kg Wasser gelöst und - nach dem Erkalten - mit einer Lösung von 0.54 kg $H_2TiF_6$ (40 Gew.-%), 0,97 kg $Ca(NO_3)_2$ x $4H_2O$ in 4,36 kg Wasser versetzt. Der erhaltenen Aufschlämmung wurde anschließend - wiederum nach dem Erkalten - eine Lösung von 4,91 kg $H_3PO_4$ (55 Gew.-% $P_2O_5$) in 0,46 kg Wasser derart zugegeben, daß die Temperatur 45 °C nicht überstieg. Nach beendeter Zugabe von Phosphorsäure erfolgte eine langsame Aufheizung auf 70 bzw. 90 °C. Die jeweilige Temperatur wurde zwecks Reifung des Aktivierungsmittels für die Dauer von 30 Minuten aufrechterhalten. Sämtliche Mischvorgänge und der Reifeprozeß wurden unter Rühren durchgeführt. Das Atomverhältnis Ti:P betrug 1:28,8.

Aktivierungsmittel 1a

Es wurde ein Aktivierungsmittel nach dem Verfahrensgang von Aktivierungsmittel 1 hergestellt, jedoch wurden die einzelnen Komponenten bei einer Temperatur von 70 °C vermischt und bei einer Temperatur von 80 °C zum einen 30 Minuten, zum anderen 60 Minuten gerührt.

Aktivierungsmittel 2

Es wurden die unter Aktivierungsmittel 1 erwähnten Chemikalien und Mengen eingesetzt, wobei das Mischen der Komponenten in einem Autoklav bei einer Temperatur von 60 °C erfolgte. Anschließend wurde der Autoklav verschlossen und ein Druck von 5 bar angelegt. Der Reifungsprozeß wurde bei einer konstanten Temperatur von 70 °C in einem Fall während 30 Minuten, im anderen Fall während 180 Minuten durchgeführt. Danach wurde der Autoklav entspannt, das so entstandene Produkt auf eine Konzentration von 50 bis 100 g/l Feststoff verdünnt und mit organischem Polymer stabilisiert. Sämtliche Mischvorgänge und der Reifungsprozeß erfolgten unter Rühren.

Aktivierungsmittel 2a

Die Bedingungen von Beispiel 2 wurden in der Weise abgewandelt, daß der Reifeprozeß der Aufschlämmung bei einer Temperatur von 120 °C und einem Druck von 5 bar unter Rühren erfolgte. Die Reaktionszeiten betrugen 30 bzw. 60 Minuten.

Aktivierungsmittel 2b

In einem Autoklav mit Rührwerk wurden 0,125 kg $K_2TiF_6$, 2,5 kg Dinatriumphosphat und 5,6 kg Wasser vorgelegt und bei 70 °C gründlich miteinander vermischt. Der pH-Wert der Dispersion betrug 8,5. Es wurde ein Druck von 5 bar angelegt, auf 140 °C aufgeheizt und 30 Minuten bei dieser Temperatur gerührt. Die Aufschlämmung wurde zur Bildung des Aktivierungsbades auf einen Feststoffgehalt von 0,2 Gew.-% verdünnt.

Die mit den verschiedenen Aktivierungsmitteln erzielten Ergebnisse hinsichtlich Gewicht der nach der Aktivierung erhaltenen Phosphatschicht und Bedeckungsgrad der Phosphatschicht sind in der Tabelle zusammengestellt. Sie belegen, daß lediglich die nach dem erfindungsgemäßen Verfahren hergestellten Aktivierungsmittel 1 und 2 eine gute aktivierende Wirkung zeigen. Am deutlichsten wird dies dadurch, daß nur durch eine Aktivierung mit den Aktivierungsmitteln 1 und 2 bei einer Phosphatierdauer von 6 min eine geschlossene Phosphatschicht erhalten wurde. Die Schichtgewichte betrugen dabei zwischen 3,0 und 3,5 g/m². Bei den nach 2a und 2b hergestellten Aktivierungsmitteln war keine aktivierende Wirkung festzustellen, d.h. die Phosphatschichten waren grobkristallin. Darüber hinaus waren die Phosphatschichten - wie bei den Aktivierungsmitteln gemäß 1a - nicht geschlossen.

5

| Aktivierungsmittel | Reaktionszeit (min) | Temperaturen (°C) | Druck (bar) | Gewicht der erhaltenen Phosphatschicht (g/m$^2$) | Schichtbedeckungsgrad nach 6 min (%) |
|---|---|---|---|---|---|
| 1 | 30 | < 45/70 | normal | 3,0 | 100 |
| 1 | 30 | < 45/90 | normal | 3,4 | 100 |
| 1a | 30 | 70/80 | normal | 1,0 | 20 b) |
| 1a | 60 | 70/80 | normal | 1,3 | 30 b) |
| 2 | 30 | 60/70 | 5 | 3,5 | 100 |
| 2 | 180 | 60/70 | 5 | 3,3 | 100 |
| 2a | 30 | 60/120 | 5 | > 6 | 15 a) |
| 2a | 60 | 60/120 | 5 | > 6 | 10 a) |
| 2b | 30 | 70/140 | 5 | > 7 | 20 a) |

a) Die Schichten waren nicht geschlossen und grobkristallin.

b) Die Schichten waren nicht geschlossen jedoch feinkristallin.

Aktivierungsmittel 3

Die Aktivierungsmittel 1 und 2 wurden direkt nach dem Reifeprozeß mit in Wasser gelöstem Kupfernitrat unter Rühren versetzt, so daß eine Kupferkonzentration von 0,5 bis 2,0 Gew.-% (bezogen auf den Feststoffgehalt) erreicht wurde. Hieraus wurde durch direkte Verdünnung ein Aktivierungsbad mit einem Feststoffgehalt von 1,0 g/l gewonnen.

Es zeigte sich, daß durch den Zusatz von Kupfersalzen das Schichtgewicht durchschnittlich um 0,5 g/m² gesenkt werden konnte. Die Mindestphosphatierzeit wurde ebenfalls verringert. Nach 3 Minuten langer Behandlung im Phosphatierbad waren die Oberflächen der Bleche weitgehend bis vollständig mit einer Zinkphosphatschicht von feinkristalliner Beschaffenheit überzogen. Herkömmliche Aktivierungsmittel führen demgegenüber unter gleichen Bedingungen zu wesentlichen Lücken in der Bedeckung.

Neben Schichtgewicht und Bedeckungsgrad der nach der Aktivierung erhaltenen Phosphatschicht ist ein wesentliches Kriterium die Morphologie der Oberfläche der Zinkphosphatschicht. Mit Hilfe von Rasterelektronenmikroskop-Aufnahmen mit 2000-facher Vergrößerung konnte festgestellt werden, daß durch eine Aktivierung mit Aktivierungsmitteln gemäß Beispiel 1, 2 und 3 extrem feinkristalline Zinkphosphatschichten erhalten werden. Die kubusförmigen Zinkphosphatkristalle sind darüber hinaus von einheitlicher Größe. Auch insoweit ist der Nachweis für die gute aktivierende Wirkung der nach dem erfindungsgemäßen Verfahren hergestellten Aktivierungsmittel erbracht.

**Beispiel 2**

Zur Durchführung des Verfahrensganges

| | |
|---|---|
| 1. Reinigen | 10 min Tauchen |
| | 3% Konzentrat in Wasser |
| | 70° C |
| 2. Spülen | Kaltes Wasser |
| | 1 min |
| 3. Phosphatieren | 1,2 g/l Zn; 12,0 g/l $P_2O_5$; 0,8 g/l Mn; 0,8 g/l Ni; 7 g/l $NO_3$; 4,07 g/l Na; 0,17 g/l $NaNO_2$; |
| | 50° C |
| | 6 min Tauchen |
| 4. Spülen | kaltes Wasser |
| | 30 sec |
| 5. Trocknen | mit Warmluft |

wurden verschiedene flüssige Konzentrate für Reiniger bzw. aktivierende Reiniger formuliert. Die Zusammensetzung der Konzentrate und deren Aussehen nach unterschiedlich langer Lagerdauer sind im folgenden tabellarisch angegeben. Konzentrat 1 ist frei von Aktivierungsmitteln, das mit der Nr. 2 enthält ein handelsübliches Aktivierungsmittel. Die Konzentrate 3 bis 7 enthalten Aktivierungsmittel 1 entsprechend der Erfindung.

Die sich anschließende Tabelle weist die Ergebnisse aus, die mit den verschiedenen Konzentraten bei Durchführung des Verfahrensganges erzielt wurden.

EP 0 454 212 A1

Konzentrat
Nr. Zusammensetzung                          Aussehen

1    20 % $K_4P_2O_7$                         klare Lösung
      2 % Lutensit APS[a)]
     Rest Wasser

2    20 % $K_2HPO_4$                          trübe Lösung, nach 1 d
      2 % Aktivierungsmittel                  Lagerung klar mit
         (handelsüblich)                      Bodensatz
      2 % Lutensit APS[a)]
     Rest Wasser

3    20 % $K_4P_2O_7$                         trübe Lösung, nach 3 d
     15 % KOH                                 Lagerung klar mit
      2 % Lutensit APS[a)]                    Bodensatz
      1 % Aktivierungsmittel 1
     Rest Wasser

4    15 % $K_4P_2O_7$                         trübe Lösung, nach 3 d
      5 % $KHCO_3$                            Lagerung klar mit
      5 % Natriumglukonat                     Bodensatz
      2 % Lutensit APS[a)]
      1 % Aktivierungsmittel 1
     Rest Wasser

5    20   % $K_2HPO_4$                        milchige, viskose
      5   % Natriumglukonat                   Lösung, unverändert nach
      0,4 % Polysaccharid[b]                  3 Monaten Lagerung
      0,5 % Aktivierungsmittel 1
      2   % Lutensit A-LBN[c)]
      2   % Arkopal N 100[d]
     Rest Wasser

6    18   % $K_2CO_3$                         milchige, viskose
     10   % $K_2HCO_3$                        Lösung, unverändert nach
      5   % $K_4P_2O_7$                       3 Monaten Lagerung
      5   % Kaliwasserglas 28-30° Bé
      2   % Lutensit A-LBN[c)]
      2   % Arkopal N 100[d]
      0,3 % Polysaccharid
      0,8 % Aktivierungsmittel 1
     Rest Wasser

7    26   % Natriumwasserglas                 milchige, viskose
            37-40° Bé                         Lösung, nach 3 Monaten
      9,5 % KOH                               Lagerung ca. 10% Auf-
      6   % $K_4P_2O_7$                       schwimmen von klarer,
      0,3 % Polysaccharid[b)]                 wässriger Lösung
      1   % Aktivierungsmittel 1
     Rest Wasser

a) Na-Alkylsulfonat der Fa. BASF AG
b) Rhodopol 23 der Fa. Rhone-Poulenc
c) Na-Dodecylbenzolsulfonat der Fa. BASF AG
d) Nonylphenolethoxylat der Fa. Hoechst AG

8

EP 0 454 212 A1

| Konzentrat Nr. | Gewicht der Phosphat-schicht (g/m$^2$) nach | | Kristallinität nach | |
| --- | --- | --- | --- | --- |
| | 2 h | 3 Monaten | 2 h | 3 Monaten |
| 1 | > 6 | > 6 | grob | grob |
| 2 | 3,4 | > 6 | mittel-fein | grob |
| 3 | 2,1 | 2,5 | fein | mittel-fein |
| 4 | 1,5 | 1,6 | fein | fein |
| 5 | 1,3 | 1,5 | fein | fein |
| 6 | 1,6 | 1,5 | fein | fein |
| 7 | 1,6 | 1,8 | fein | fein |

**Patentansprüche**

1. Verfahren zur Herstellung von Aktivierungsmitteln auf Basis Titan(IV)-Phosphat für die Aktivierung metallischer Oberflächen vor einer Zinkphosphatierung durch Umsetzung einer Titan(IV)-Verbindung mit einer Phosphor(V)-Verbindung in wäßriger Phase, dadurch gekennzeichnet, daß man unter Bedingungen gründlicher Vermischung

    a) ein oder mehrere in Wasser oder Säure gelöste Titan(IV)-Verbindungen mit wäßrigem Alkali alkalisiert,

    b) anschließend unter Beibehaltung des alkalischen pH-Wertes mit Orthophosphat versetzt und

    c) bei einer Temperatur im Bereich von 70 bis 90° C und bei einem Druck zwischen Normaldruck und 300 bar mindestens 15 Minuten zwecks Reifung des Aktivierungsmittels rührt,

    wobei bei Durchführung des Reifeprozesses gemäß Stufe c) bei einem Druck zwischen Normaldruck und 1 bar Überdruck die Verfahrensschritte a) und b) bei einer Temperatur zwischen Raumtemperatur und 45° C

    und bei Durchführung des Reifeprozesses gemäß Stufe c) bei einem Druck zwischen 1 bar und 300 bar die Verfahrensschritte a) und b) bei einer Temperatur zwischen Raumtemperatur und 90° C durchgeführt werden.

2. Verfahren nach Anspruch 1, dadurch gekennzeichnet, daß man als Titan(IV)-Verbindung Titanhalogenide, Titanoxidsulfat, Alkoxytitanate, Titannitrat, Titandisulfat, Alkalimetallhexafluorotitanate und/oder Hexafluorotitansäure einsetzt.

3. Verfahren nach Anspruch 1 oder 2, dadurch gekennzeichnet, daß man bei Einsatz fluoridhaltiger Titan-(IV)-Verbindungen eine dem Fluorid etwa stöchiometrische Menge an zur Calciumfluoridbildung befähigtem Calciumsalz, wie Calciumnitrat, zusetzt.

4. Verfahren nach Anspruch 1, 2 oder 3, dadurch gekennzeichnet, daß man die Titan(IV)-Verbindung mit Phosphat in einem Atomverhältnis von 1:(15 bis 60) umsetzt.

5. Verfahren nach einem oder mehreren der Ansprüche 1 bis 4, dadurch gekennzeichnet, daß man die Aufschlämmung in der Stufe c) bei einem Überdruck von 1 bis 50 bar und einer Temperatur von 70 bis 85° C während 30 bis 180 Minuten behandelt.

6. Verfahren nach einem oder mehreren der Ansprüche 1 bis 5, dadurch gekennzeichnet, daß man dem flüssigen Aktivierungsmittel zur Stabilisierung Verdickungsmittel, vorzugsweise aus der Gruppe der natürlichen Polymere, zusetzt.

7. Verfahren nach einem oder mehreren der Ansprüche 1 bis 6, dadurch gekennzeichnet, daß man den Feststoffgehalt des flüssigen Aktivierungsmittels auf 50 bis 100 g/l einstellt.

8. Verfahren nach einem oder mehreren der Ansprüche 1 bis 7, dadurch gekennzeichnet, daß man dem Aktivierungsmittel Kupfersalze, vorzugsweise Kupfernitrat, in einer Konzentration von 0,5 bis 2 Gew.-% (bezogen auf den Feststoffgehalt) zusetzt.

9. Verfahren nach einem oder mehreren der Ansprüche 1 bis 8, dadurch gekennzeichnet, daß man die gemäß Stufe c) erhaltene Aufschlämmung unterhalb 110 °C trocknet.

10. Verfahren nach Anspruch 9, dadurch gekennzeichnet, daß man die gemäß Stufe c) erhaltene Aufschlammung im Sprüh- oder Wirbelschichtverfahren bei einer Produkttemperatur zwischen 60 und 90 °C auf eine Restfeuchte von < 20 Gew.-% trocknet.

11. Verwendung des nach einem oder mehreren der Ansprüche 1 bis 10 hergestellten Aktivierungsmittels allein oder im Gemisch mit kondensierten Phosphaten und/oder Komplexbildnern und/oder Silikaten und/oder Tensiden und/oder wasserlöslichen organischen Polymeren (Verdickungsmittel) im pH-Bereich von 7 bis 11, vorzugsweise 7,5 bis 10, zur Aktivierung von Metalloberflächen aus Eisen, Stahl, Zink, verzinktem Eisen oder verzinktem Stahl, Aluminium und/oder aluminiertem Stahl vor der Zinkphosphatierung.

12. Verwendung gemäß Anspruch 11 mit der Maßgabe, daß das Aktivierungsmittel in einen gebrauchsfertigen alkalischen Reiniger oder in ein wässrig-flüssiges alkalisches oder festes Reinigerkonzentrat eingearbeitet wird.

Europäisches
Patentamt

**EUROPÄISCHER
RECHERCHENBERICHT**

Nummer der Anmeldung

**EP 91 20 0845**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 823 716 (MONSANTO CO.) <br> * Patentansprüche 26-44 * <br> – – – | 1-5,7, 9-11 | C 23 C 22/80 <br> C 01 B 25/37 |
| D,Y | EP-A-0 307 839 (HENKEL K.A.A.) <br> * Patentansprüche 1,7-13 * <br> – – – | 1-5,7, 9-11 | |
| A | FR-A-2 114 874 (DULUX AUSTRALIA LTD) <br> * Patentansprüche 1,12; Beispiel 7; Seiten 11-12 * <br> – – – | 8,12 | |
| A | DE-C-8 856 38 (METALLGESELLSCHAFT AG) <br> – – – | | |
| A | DE-A-2 931 799 (FOSFA-COL) <br> – – – | | |
| A | FR-A-1 291 382 (SOCIET CONTINENTALE PARKER) <br> – – – – – | | |

|  | RECHERCHIERTE SACHGEBIETE (Int. Cl.5) |
|---|---|
| | C 23 C <br> C 01 B |

Der vorliegende Recherchenbericht wurde für alle Patentansprüche erstellt

| Recherchenort | Abschlußdatum der Recherche | Prüfer |
|---|---|---|
| Den Haag | 25 Juli 91 | TORFS F.M.G. |